# EUROPEAN PATENT APPLICATION

(11) **EP 3 525 092 A1**
(43) Date of publication of application: **14.08.2019**
(21) Application number: 19159219.5
(22) Date of filing: 23.06.2014
(51) Int. Cl.: G06F 9/451, G06F 16/188, G06F 16/14

(54) **METHODS AND SYSTEMS FOR INSTANTANEOUS FILE TRANSFER**

(30) Priority: 22.06.2013 US 201361838264 P; 23.06.2013 US 201361838289 P
(62) Divisional of application: 14802709.7
(71) Applicant: Forgetbox SAS, 92410 Ville d'Avray (FR)
(72) Inventor: ARAB-ROUBAND, Gawen, 75004 Paris (FR); MARCOMBES, Severin Olivier Yves, 92140 Ville d'Avray (FR)
(74) Representative: Ahmad, Sheikh Shakeel

(57) **Abstract**

A method of receiving one or more files at a receiving computer device from one or more sending computer devices is described. The method comprises: (a) receiving metadata describing the one or more files from the one or more sending computer devices; (b) using this metadata to display the one or more files to be transferred as virtual files in an operating system of the receiving device; (c) receiving the content of the one or more files from the one or more sending computers; (d) enabling a user of the receiving device to manipulate or modify the virtual files displayed in (b) during (c) as if they were non-virtual files; and (e) for each file whose content has been received in (c), transforming the virtual file representing it into a non-virtual file including any modifications from the user in (d).

## Description

### CROSS REFERENCE TO RELATED APPLICATIONS

This application claims priority from the following two U.S. Provisional Patent Applications, both of which are hereby incorporated by reference: U.S. Provisional Patent Application No. 61/838,264 filed on June 22, 2013 entitled Method For Displaying Virtual Files Side-To-Side With Non-Virtual Files In An Operating System, and U.S. Provisional Patent Application No. 61/838,289 filed on June 23, 2013 entitled Method for Instantaneous File Transfer.

### BACKGROUND

The present application is generally related to electronic data storage and file transfer.

One or more embodiments disclosed herein are directed to file storage organization on electronic devices. The conventional organization of data files in an electronic device is tightly linked with the physical storage media on which these files are stored. For example, most computers having two hard drives will show these two hard drives as two different places to store files in their Operating System (OS). This particularity makes file organization difficult for the user, as his files are often split among different storage units.

Two solution have been provided to address this problem: Redundant Array of Independent Disks (RAID)-type logical storage units and Virtual File Systems (VFS).

Storage solutions, such as RAID-type storage units, enable several storage devices such as hard drives to be used as a group, so they can be seen as a unique storage device in regard to the Operating System (OS) of the device on which they are installed. These solutions can enable a user to store all of his files in a same logical storage volume, on a given device. However, they often restrict which type of storage device can be connected to the system to extend the storage available on this volume. For example, a USB key cannot be used to extend the storage of a hardware RAID device based on several hard drives. Therefore, even if an electronic device uses a RAID-type logical storage unit, connecting a new storage device to this electronic device may result in several storage volumes displayed to the user. More importantly, RAID-type logical storage units are designed to unify the storage of a single device. They do not enable the storage of multiple electronic devices to be represented as a single logical storage unit.

Another solution, Virtual File Systems (VFS), removes the link between hardware storage devices and the organization of the files they contain. It does so by letting an application manage the way files are displayed in the OS. This application can store the files it manages on various storage devices, either local or accessible via the network, while displaying them in a single logical storage unit from the perspective of the OS and of the user. However, in the OS, conventional VFS solutions separate this single local storage unit, which takes the form of a virtual hard drive, and the physical storage of the device on which they are installed. Because of this, the user using a VFS solution still has to manually select where to store his files: either on the virtual drive of the VFS solution he's using, either on the physical hard drive of his device.

The most used Operating Systems, Microsoft Windows and Apple Mac OS X, both encourage the user, through their interfaces, to use the physical storage of his device to store his personal data. Therefore, using a conventional VFS solution, as is, still does not provide a way for the user to enjoy the benefits of a unified storage solution on his electronic devices.

One or more further embodiments generally relate to the field of file transfer between two electronic devices. File transfer refers to the process of copying a piece of organized information, or file, from one electronic device to another.

Conventional file transfer between computers, or between electronic devices, is time consuming. The various techniques used today to send a file, or a group of files, from one device to another can be split in two categories: techniques using the push method, and techniques using the pull method.

In the push method, the sending device initiates the transfer. The files are either transferred directly to the receiving device, either sent to an intermediary device (e.g., a Web, an E-mail or a FTP server).

In the pull method, the receiving device initiates the transfer. In this case, the receiving user can see information about the files before initiating the data transfer. This information may include the names of the files, their organization - if appropriate - in folders and subfolders and some describing metadata (e.g., size of the file, thumbnails). This method requires the sending device to be setup as a server, and the receiving device to connect to this server prior to the transfer. It is used today by protocols such as BitTorrent, FTP, and HTTP. Files transferred to an intermediary device through the push method are often downloaded from this intermediary device to the receiving device using the pull method.

Regardless of the method used, conventional techniques generally treat the file transfer as a synchronous process. The transferred files do not appear in the File Manager of the receiver device (e.g., Microsoft Windows Explorer, Apple Finder, etc.) before the end of the transfer. This means that the receiver user cannot open, move, rename, or delete the transferred files during the transfer. The receiving user is asked to wait, which results in loss of time for the user.

When using the push method, most of this time loss occurs because the receiving user does not have control upon the transfer process. When multiple files are transferred, this receiving user is the only one to know which file he needs to transfer in priority. However, he doesn't have control upon which file copied to his device first. For example, a lawyer receiving twenty documents from a client company might only be interested to begin working on one of them in particular at the specific time the transfer occurs.

When using the pull method, time is lost because the receiving user must manually start the transfer himself. In most situations, this receiving user will not trigger the transfer before he actually needs the file. This results in situations where the user has to wait for the download of the file he needs when he needs it most. As an example, most people using a web client interface such as Google Gmail trigger the download of the files attached to their e-mails specifically at the time when they need to open them.

In both methods, the synchronous aspect of the transfer also causes additional loss of time in situations when the receiving user only needs part of a specific file to begin using it. An example of such a situation is when a user receives a movie. With conventional transfer methods, this user must wait for the entire movie to be transferred on his device before watching it. However, he could technically begin watching the movie even if only the beginning of the movie file was received on his device (i.e., in streaming).

Today, various technologies, such as Microsoft Windows SMB/CIFS ("Samba"), WebDAV or SSHFS enable a user on a client machine to remotely access and manipulate documents stored on another machine (i.e., a server machine). These file access techniques are relying on transfers of data from the server machine to the client machine. They often enable the user of the client machine to manipulate remote files directly in the File Manager of his Operating System (e.g., Microsoft Windows and, Mac OS). Most of them even enable the user to manipulate a remote file on the client machine while this file wasn't entirely transferred to the client machine. For example, the user of the client machine can begin to watch a movie stored on the server machine even if only the beginning of the movie file has been transferred to the client machine.

However, these techniques differ from file transfer techniques because they do not actually copy files from the server machine to the client machine. When the user manipulates (e.g., edits) a file on the client machine, the file is modified on the server machine.

### BRIEF SUMMARY OF THE DISCLOSURE

In accordance with one or more embodiments, methods and systems are provided, using conventional Virtual File Systems, to display virtual files side-by-side with non-virtual files in the OS of electronic device.

In accordance with one or more further embodiments, a file transfer method and system are provided using virtual files to make the transfer of files between two or more electronic devices asynchronous, more time efficient, and instantaneous in appearance to the user.

Various techniques are utilized to greatly reduce the perceived file transfer duration to the eyes of users receiving files. A first technique in accordance with one or more embodiments comprises displaying the files being transferred in the OS of the receiving device before the transfer has actually begun. This technique relies on mechanisms to display virtual files in an OS.

Techniques In accordance with one or more further embodiments enable the user to access and manipulate the files being transferred in the same way that he would access and manipulate real files stored on his device. Such techniques enable a user to, without limitation, read, write, rename, and move a file being transferred to his device, even if the file transfer is not finished.

### BRIEF DESCRIPTION OF THE DRAWINGS

FIG. 1 is a block diagram illustrating the relationship between a Unifier Virtual File System (Unifier VFS) in accordance with one or more embodiments and other components of an electronic device on which it is installed.
FIG. 2 is a flow chart generally illustrating a file transfer process in accordance with one or more embodiments.
FIG. 3 is a block diagram illustrating select components of a receiving device to process a file transfer in accordance with one or more embodiments.
FIG. 4 is a block diagram illustrating the interconnections between the components in FIG. 3 and others in the receiving device in accordance with one or more embodiments.
FIG. 5 is a flow chart describing operation of a file system interceptor used in the receiving device to handle an instruction from the OS or the applications of the receiving device to read part of a file currently being transferred in accordance with one or more embodiments.
FIG. 6 is a flow chart describing operation of the file system interceptor used in the receiving device to handle an instruction from the OS or the applications of the receiving device to write in a file currently being transferred in accordance with one or more embodiments.

### DETAILED DESCRIPTION

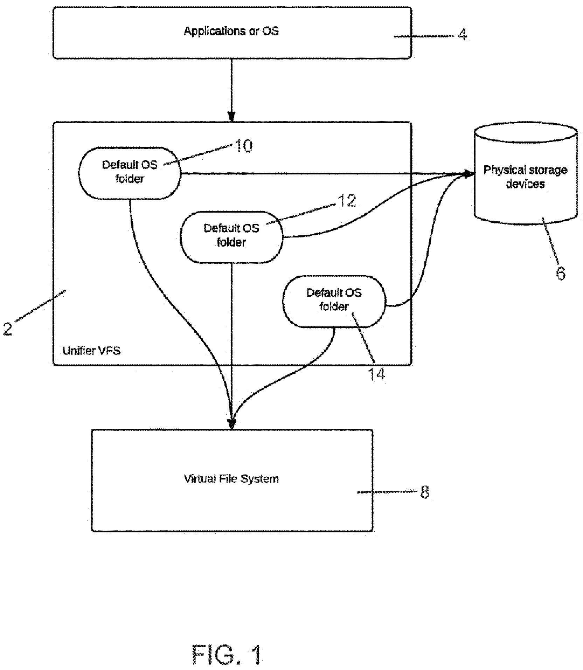

FIG. 1 illustrates a Unifier Virtual File System (Unifier VFS) 2 in accordance with one or more embodiments installed on an electronic device. The electronic device can comprise a variety of computer devices including, without limitation, personal computers (including desktop, notebook, and tablet computers), smart phones, and other devices. A representative electronic device includes at least one computer processor and at least one storage medium readable by the processor for storing applications and data. The device also includes input/output devices.

The Applications or OS 4 of the electronic device can interact with the Unifier VFS 2 to display real files stored on physical storage devices 6 side-by-side with virtual files created by a conventional Virtual File System Component (VFS Component) 8.

The Virtual File System Component 8 can be any virtual file system. It may comprise an already existing VFS Component known in the art. In accordance with one or more embodiments, the virtual files managed by this component can be displayed side-by-side with real files in the OS of the electronic device on which it is installed.

The first step in a method in accordance with one or more embodiments comprises creating a new Virtual File System layer, the Unifier VFS 2, to display the contents of one or several Physical storage devices 6 and the contents of one or several conventional Virtual File System Components 8 together in a unique file system, under a common files and folders architecture. The second step of the method comprises making the OS of the target device use this Unifier VFS 2 as its default and primary location to store data. In accordance with one or more embodiments, mechanisms are provided to make the Unifier VFS 2 manage correctly the storage read and write requests from the OS, and to make the virtualization of the file system transparent to the user.

To display virtual files from the Virtual File System Component 8 side-by-side with real files stored in the device itself, on physical storage devices 6, the method in accordance with one or more embodiments virtualizes the default folders defined by the OS for the user to store his data. While the embodiments disclosed herein refer to virtualizing default folders, it should be understood that any folder in the file system may alternately be virtualized in accordance with the embodiments.

These default folders vary in number depending on the OS defining them. On Apple Mac OS, the default folder to store the data of a user named "garfield" is often /Users/garfield/. On Linux or other UNIX-based Operating Systems, this folder would often be /home/garfield/. On Microsoft Windows 7 and Microsoft Windows 8, this folder would often be C:\Users\garfield\, where C: is the name of the main storage volume (i.e., Main Microsoft Windows partition on the main hard drive) on the device. By default, each OS defines the path of its default folders so that their content is stored on the main storage unit of the device. The method in accordance with one or more embodiments comprises modifying the parameters of the OS so that their content is stored on a special Virtual File System, the Unifier VFS 2.

The Unifier VFS 2 is either a standalone Virtual File System, either a sub-component of the conventional Virtual File System Component 8, which will be used to display virtual files on the device. In some embodiments, the Unifier VFS creates an additional Virtual Drive in the OS of the device. In other embodiments, it will help operate the Virtual Drive created by the conventional Virtual File System 8 used in the device. In preferred embodiments, it will be part of the file system driver operating the main storage volume of the device, making file virtualization invisible to the eyes of the user.

In accordance with one or more embodiments, the role of the Unifier VFS 2 is threefold: it contains a virtual "endpoint" folder 10, 12, 14 for each OS default folder into which virtual files have to be displayed. The OS in accordance with one or more embodiments is configured so its default folders are redirected to these virtual endpoints 10, 12, 14 instead of being linked to real folders stored in the physical storage devices 6 of the device. On some Operating Systems, such as Microsoft Windows, the path of most default folders, such as the My Documents folder, can be modified in the configuration of the OS (in this case, in the Windows Registry database). On other Operating Systems, such as Apple Mac OS X or Linux Ubuntu, a good method for changing the path of a default folder is to replace this folder, on the physical storage devices 6, by a symbolic link to one of the virtual endpoints 10, 12, 14. If this method is used, the original default folder is renamed and its contents should be kept on the physical storage device 6. Depending on the possibilities offered by each OS, the embodiments define which folders it is more appropriate to link to virtual "endpoint" folders 10, 12, 14 in the Unifier VFS 2. These folders may be subfolders of default folders, instead of the default folders themselves. For example, on Microsoft Windows 7 and Microsoft Windows 8, it might be more appropriate, because more easily configurable, to link the subfolders of the home directory of the user (i.e., folder C:\Users\garfield\ for a user named "garfield" having its Operating System installed on drive C:) to the virtual "endpoint" folders 10, 12, 14 of the Unifier VFS 2, instead of linking the home directory itself. In fact, these subfolders are also default folders, and these OSs do not encourage users to put any valuable data in their home directory itself. In some embodiments, it might also be wise to only link to the virtual "endpoint" folders 10, 12, 14 of the Unifier VFS 2 the subfolders of the OS default folders into which virtual files should be displayed. Embodiments doing so would have to link the virtual "endpoint" folders 10, 12, 14 of the Unifier VFS 2 dynamically in the OS depending on the location of the virtual files in the VFS 8. However, this particularity may enable them to ensure the OS provides the best performance when displaying folder into which there are only real files.

The Unifier VFS 2 connects internally each one of its virtual "endpoint" folders 10, 12, 14 to a specific folder in the file system hierarchy of the Conventional Virtual File System 8 used on the device. The path of this specific folder in the file system hierarchy of the Conventional VFS 8 depends on the constraints of each embodiment. In the same way, the Unifier VFS 2 connects each one of its virtual "endpoint" folders 10, 12, 14 to the real folder previously designated by the OS in its place as a default folder location, before the OS reconfiguration. The two folders to which each virtual "endpoint" folder is linked should be stored in a database, either local to the Unifier VFS 2, either shared with another component.

The Unifier VFS 2 makes the content of each one of its virtual "endpoint" folders 10, 12, 14 be the merged content of the two folders it is linked to. For example, a virtual "endpoint" folder 10, 12, 14 linked to a real folder containing only a file called A.txt, and to a virtual folder containing only a file called B.txt, should contain 2 virtual files: A.txt and B.txt. From the perspective of the OS, these virtual files should be exact copies of the files A.txt and B.txt that they represent. In further detail, for each virtual "endpoint" folder 10, 12, 14, the embodiments define, between the two folders this virtual "endpoint" folder is linked to, which one has the priority upon the other. In some situations, the two linked folders may happen to contain, relative to their respective paths, two files or two folders having exactly the same path. In this case, the priority should define which one of these duplicate files or folders is represented in the content of the virtual "endpoint" folder.

Using an internal or a shared database, the Unifier VFS 2 should keep track, for each one of the virtual files and folders it contains in its file system, of which file or folder it represents. When the OS reads or asks information about one of its virtual files, the Unifier VFS 2 should return the content or the information about the appropriate represented file, either from the Conventional VFS 8 or from the Physical storage devices 6. In the same way, when the OS modifies, renames, moves or deletes one of its virtual files, the Unifier VFS 2 should modify, rename, move or delete the appropriate represented file, either from the Conventional VFS 8 or from the physical storage devices 6. Each embodiment should define, when the OS creates a new file or a new directory in the Unifier VFS 2, whether the created data should be written on the physical storage devices 6 or on the Conventional VFS 2.

The advantages of the various embodiments include one or more of the following. It enables the virtual files of any conventional Virtual File System to be placed side-by-side with real files in the OS of an electronic device. This capability brings a solution for the user of an electronic device to use the powerful capabilities of a conventional Virtual File System, such as remote file storage, without having to move his files manually in a Virtual drive or directory. The user can advantageously store all of his files at the same place - into the default folders defined by the OS of his device - no matter where they are stored. Local files will continue to be stored in the default folders initially defined by the OS, on the physical storage of the device, while virtual files - stored anywhere thanks to the mechanisms offered by conventional Virtual File Systems - can populate these same folders and be moved in any of their subfolders. One or more embodiments is broadly directed to the combination of a Virtual File System architecture and a technique for configuring an Operating System to make virtual files displayable side-by-side with files that are physically stored in the local storage of the device.

### File Transfer Methods and Systems

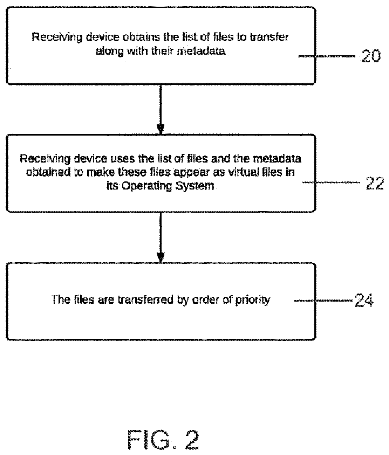

Further embodiments are directed to file transfer between two electronic devices. FIG. 2 shows the three major steps of the process to transfer one or more files from a sending device to a receiving device in accordance with one or more embodiments.

The first step 20 occurs before the file transfer itself. It puts the receiving device in accordance with the sending device to determine which files will be transferred during the process. During this first step 20, the two devices both authorize the transfer to happen, and acknowledge to each other their intentions to begin the transfer process. At the end of this first step 20, the receiving device possesses some metadata about the files to be transferred. In most embodiments, this metadata will be transferred to the receiving device directly from the sending device. In other embodiments, such as when the file transfer is made via the pull method, the receiving device may already possess the required metadata before the transfer begins.

The only non-optional metadata possessed by the receiving device before the transfer begins is the name or another identification of the files about to be transferred. However, it is preferred that these metadata also include the size and thumbnails of the files about to be transferred. If multiple files will be transferred, the receiving device in some embodiments also knows the hierarchical organization, in optional folders and sub-folders, of the files about to be transferred. Some embodiments might also include in these metadata additional files related to the files about to be transferred. Metadata files like the Thumbs.db or the .DS_Store files created respectively by Microsoft Windows Explorer and Apple Finder are good examples of files to transfer from the sending device to the receiving device during this first step 20. In some embodiments, this type of metadata files can be generated by the sending device, upon request from the receiving device.

In general, the more metadata the receiving device possesses about the files to be transferred before the transfer, the better the user experience. However, to be efficient, the metadata transferred from the sending device to the receiving device should be relatively fast to transfer in comparison to the time needed to transfer the content of the files themselves between the two devices. The perceived transfer duration by the eyes of the receiving user will often be the time needed for the receiving device to obtain these metadata. In some embodiments, it is possible to transfer only a minimal amount of metadata during this first step 20, and to transfer additional metadata right before the third step 24 of the transfer process.

In the second step 22 of the transfer process, the receiving device displays the files about to be transferred as virtual files in its Operating System. Each virtual file created should represent one of the files about to be transferred. The metadata obtained by the receiving device in first step 20 are used to make each virtual file look as similar as the file it represents as possible, from the perspective of the receiving device's OS and applications. In most embodiments, the virtual files will have the same name, thumbnail, and size as the files they represent. If multiple files are about to be transferred, it is preferred that the virtual files keep the same organization, in folders and sub-folders, as the files they represent.

The virtual files are used to make the user of the receiving device feel like the transfer has been processed. The virtual files can be displayed in the OS of the receiving device using mechanisms such as those described above and in U.S. Provisional Patent Application No. 61838264. In some embodiments, the virtual files can be placed in a virtual drive in the OS. However, a better effect can be achieved if the virtual files can be placed side-by-side with non-virtual files in the OS, thus using specifically the mechanisms described above and in the Provisional Patent Application No. 61838264. It is preferred to allow the user to move the virtual files anywhere in the file system hierarchy of the receiving device's OS, without requiring this OS to read the content of the virtual files moved.

The mechanisms used to display virtual files in the OS enable the OS interactions with the virtual files to be intercepted. The method comprises making the virtual file system used for the implementation respond to calls from the OS or from the applications as if the virtual files were exact copies of the files they represent.

The mechanisms used to enable the reading of a non-modified virtual file resemble the mechanisms used by file access techniques. For example, a command from the OS - or from an application - to read the content of a virtual file should return the content of the file being transferred represented by this virtual file. In the same way, when the OS or an application ask for the size, name, or other metadata of a virtual file, the virtual file system used for the implementation should use the metadata obtained by the receiving device at first step 20 to return the corresponding information about the file being transferred.

However, in order to make the user of the receiving device feel like the transfer has already been processed, the method in accordance with one or more embodiments also uses mechanisms to enable the user to modify the virtual files in the same way as if they were local files. These specific mechanisms differ from the mechanisms used by file access techniques. When the OS - or an application - asks to write on a specific part of a virtual file, the data written is kept local to the receiving device. The file represented by the virtual file isn't modified on the sending device. When the OS or an application ask to read a modified part of a virtual file, the data written on this part of the file by the previous modification should be returned. In the same way, if the OS - or an application - ask to modify some metadata of a virtual file, such as its name or its size, the modified metadata should be kept local to the receiving device and not modified on the sending device, on the file represented by the virtual file. Using these mechanisms, virtual files behave, to the eyes of the user, like real copies of the files they represent. These mechanisms are detailed further below.

The third step 24 of the transfer process comprises transferring the content of the files to be transferred to the receiving device. This transfer can be made using any transfer technique available between the sending device and the receiving device. In most embodiments, the sending device will transfer the data representing this content directly to the receiving device - using either the push or the pull methods. In other embodiments, the receiving device could download this data from a group of sending devices, using Peer-to-Peer technologies such as BitTorrent.

Following the method, the content of each file transferred to the receiving device should be stored temporarily in a persistent cache on the receiving device, until the transfer of this file is complete. When the OS - or an application - ask to read part of a virtual file, the virtual file system used by the implementation should be able to return data stored in this persistent cache, if it is available and corresponds to the file part being read.

In accordance with one or more embodiments, the transfer priority of the data to be transferred may be changed depending on the actions taken by the user of the receiving device in relation to the virtual files. For example, if the user asks to read a given part of a virtual file, which corresponds to data that has not yet been transferred to the receiving device, the transfer of this specific data may become of really high priority in comparison to the transfer of other data. In fact, the virtual file system will need to wait for the transfer of this specific data before answering the OS or the application call. As another example, if the user opens or clicks on a virtual file, the transfer of the content of the file represented by this virtual file might become of high priority also. In some other embodiments, the transfer priority of the various data chunks to be transferred may be defined depending on various pre-established or calculated parameters, such as the type of each file. For example, transferring the beginning of a movie file with a higher priority than the end of the same file might provide a better experience to the receiving user, as movie files are often read slowly, from their beginning to their end.

Using the methods in accordance with one or more embodiments, the transfer of each file is considered as finished when it is possible to read its corresponding virtual file from end to end using only data local to the receiving device. For example, if a virtual file is entirely overwritten by the OS of the receiving device before the transfer of the file it represents has even begun, the transfer is considered as finished. In this particular situation, it is no longer necessary to transfer the contents of the represented file from the sending device to the receiving device.

After the transfer of each file, the virtual file representing the file just transferred should be transformed into a "received file". The "received file" is an exact copy of the file that has just been transferred, on which are overwritten the potential modifications that might have been made on the virtual file representing it during the transfer. For example, if the user of the receiving device appended some data to a virtual file during the transfer of the file it represents, this data should be appended at the end of the transfer to the "received file" corresponding to the file transferred.

Upon its creation, this "received file" is local to the receiving device. The "received file" replaces the virtual file used during the transfer in the receiving device's OS. It should keep the same name and be encountered by the user at the same location in the receiving device's File Manager, if any. In some embodiments, this "received file" might be a real file. In other embodiments, this "received file" might continue to be a virtual file in the receiving device's OS, even after the transfer. In this latter case, the user of the receiving device should be able to manipulate this virtual file in the same way as if he was manipulating a real file. In more details, any modification to this virtual file should be persistent and should affect only this virtual file. The content of this virtual file should also remain the same between any modifications of the virtual file by the user, the OS, or the applications of the receiving device.

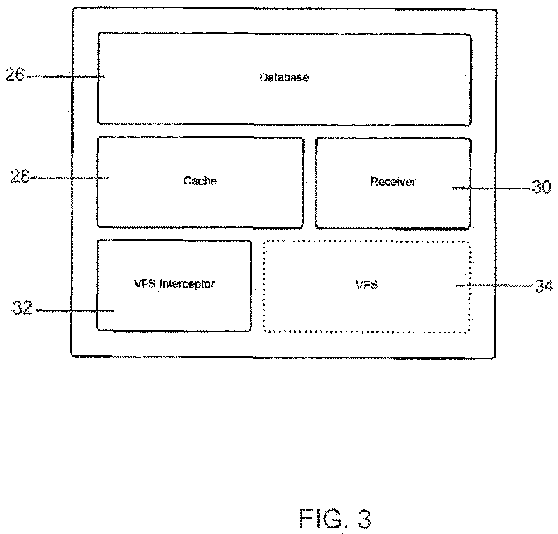

FIG. 3 shows a block diagram representing the components needed on the receiving device to process a file transfer using the methods in accordance with one or more embodiments. There is shown a Database component 26, a Cache component 28, a Receiver component 30, a Virtual File System Interceptor (VFS Interceptor) component 32, and a Virtual File System (VFS) 34. Every embodiment can have its own implementation of these components.

The receiver component 30 is used to receive data from one or several sending devices. This component enables the receiving device to communicate with the sending device and, optionally, the other devices. The data received through this component can be transferred by either the pull or the push method, or a combination of both. In some embodiments, this component will only handle asynchronous data transfers. In other embodiments, it might also handle synchronous data transfers.

The VFS 34 is used to display the files being transferred as virtual files in the OS of the receiving device, during the second step 22 of the transfer process as described in FIG. 2. This VFS can be implemented with mechanisms such as the mechanisms described above and in Provisional Patent Application No. 61838264.

The VFS Interceptor 32 is either an auxiliary component of the VFS 34, or a sub-component of this VFS 34. Its role is to intercept the interactions between the OS or the applications of the receiving device, and the virtual files that represent the files being transferred. This VFS Interceptor 32 enables the OS and the applications of the receiving device to read and write the content and the metadata of the virtual files created with the methods in accordance with one or more embodiments.

The Cache component 28 is used to store temporarily the data downloaded during the transfer process. The content of each file being transferred is stored in this cache component 28 until the transfer of this file is complete or cancelled. This cache component 28 might be persistent, meaning that rebooting the receiving device may not erase its content in some embodiments. The content of the cache component 28 is read by the VFS Interceptor 32 to obtain part of the data needed by the OS or the applications when they read virtual files. The Database component 26 stores information about the file transfers taking place, the virtual files displayed in the system and the modifications made during the transfer to these virtual files. It makes the link between each file being transferred and the virtual file representing it. It ensures this link is kept even if this virtual file is moved or renamed by the receiving device's OS or applications. Every time a virtual file is modified through the VFS Interceptor 32, the Database component 26 keeps track of the modification. The Database component 26 is also used continuously by the Receiver component 30 to define which data has to be transferred from the sending device and - in some embodiments - to define which data has to be transferred in priority. When the transfer of a file finishes, the Database component 26 is used to define the exact contents of the file received.

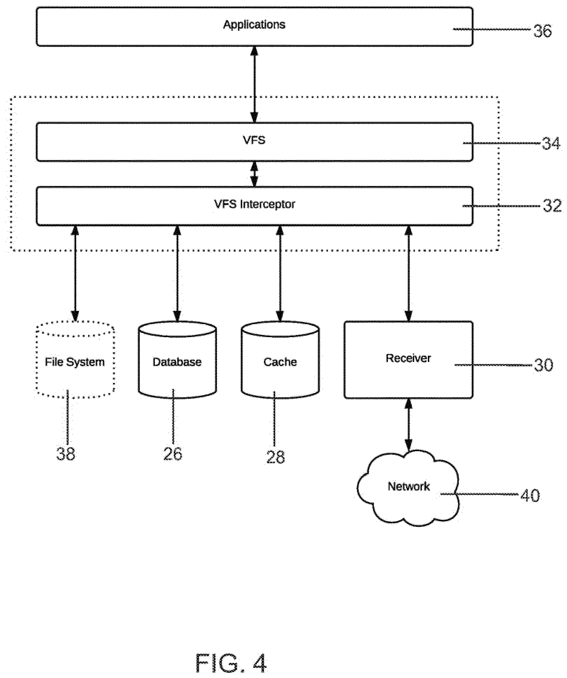

FIG. 4 shows the interconnections that may be utilized between the components - shown in FIG. 3 - needed in the receiving device and the other components of the receiving device in accordance with one or more embodiments. There is shown the Virtual File System Interceptor (VFS Interceptor) component 32, the Database component 26, the Cache component 28 and the Receiver component 30, in relation with the Applications or OS 36, the Virtual File System (VFS) component 34, the File System 38, and the Network connection 40 of the receiving device.

When files are being transferred in accordance with one or more embodiments, virtual files are created through the VFS component 34 of the receiving device. Each one of these virtual files represents one file being transferred. The Applications or OS 36 of the receiving device might interact with these virtual files (e.g., read or write from or to these files) during the transfer. As shown in FIG. 4, they can do it by sending calls to the VFS component 34 of the receiving device. These calls are intercepted by the VFS Interceptor 32 of the receiving device.

When receiving a call from the VFS component 34 to read a virtual file, the VFS Interceptor 32 uses the Database component 26 to determine where the content of the target file represented by this virtual file can be found. If the data requested by the VFS component 34 are metadata, the VFS Interceptor 32 reads these metadata directly from the Database component 26. If the data requested is the content of the target file, there are several options: (1) If the transfer of the target file is finished, the VFS Interceptor 32 reads the requested data directly from the File System 38 of the receiving device, or from any other of its storage components. (2) If the transfer is pending or still being processed, the Database component 26 indicates to the VFS Interceptor 32 which part of the target file is stored in the Cache component 28 of the receiving device, and which part still needs to be received from the sending device. If all the data requested is already stored in the Cache component 28, the VFS Interceptor 32 returns this data to the VFS component 34. Else, the VFS Interceptor 32 may ask the Receiver component 30 to download the requested data in priority over the Network connection 40 of the receiving device. It then waits for the data to be received in the Cache component 28 before returning it as an answer to the call.

To make the VFS Interceptor 32 answer these calls as fast as possible, some embodiments may enable the Receiver component 30 to use synchronous transfer methods when data is required by the VFS Interceptor 32. A good implementation might put all the other transfers handled by the receiver component 30 in pause while these synchronous transfers are being processed, to give these synchronous transfers a maximum priority. If, for any reason, the Receiver component 30 cannot obtain the data requested by the VFS Interceptor 32 in a timely manner, the VFS Interceptor 32 should return an error to the VFS component 34 of the receiving device, which would in turn return an error to the Applications or OS 36.

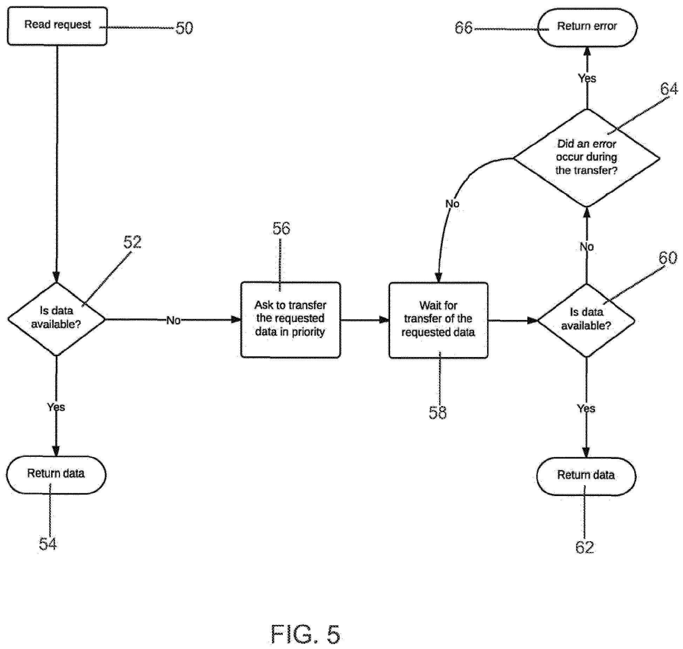

When receiving a call from the VFS component 34 to write on a virtual file, a similar process occurs. If the transfer of the target file is finished, the VFS Interceptor 32 modifies the target file directly on the File System 38 or any other storage component on which the file is stored. If the transfer of the target file is still pending or being processed, the VFS Interceptor 32 interacts with the Database component 26 to save the modification. In the latter case, in some embodiments, it might also interact with the Receiver component 30 of the receiving device to cancel the transfer of the parts of the target file that were modified on the receiving device. In fact, the transfer of these parts is no longer required for the transfer to be considered as finished. FIG. 5 shows a flow diagram describing how the Virtual File System Interceptor (VFS Interceptor) 32 used in the receiving device according to one or more embodiments should handle an instruction from the Applications or OS 36 of the receiving device to read part of a file currently being transferred.

At step 50, the Applications or OS 36 ask to read a specific part of a virtual file. The VFS Interceptor 32 checks with the Database component 26 of the receiving device to determine if the data is available at step 52. If the data is available, the VFS Interceptor 32 returns it immediately at 54. If the data is not available, the VFS Interceptor 32 may ask the Receiver component 30 to transfer this specific data in priority at step 56. Then, it waits at 58 for the data to be available. It checks regularly if the data becomes available at 60. When the data is available, the VFS Interceptor 32 returns it at 62 to the Applications or OS 36. If the data is not available, the VFS Interceptor 32 checks if an error occurred during the transfer at 64. Errors occur when the data could not be transferred in an acceptable small time, or if the sending devices cannot be reached over the Network 40. If an error occurs during the wait for the data, The VFS Interceptor 32 return an error at 66 to the Applications or OS 36 of the receiving device. While no error occurs, the VFS Interceptor continues its wait 58.

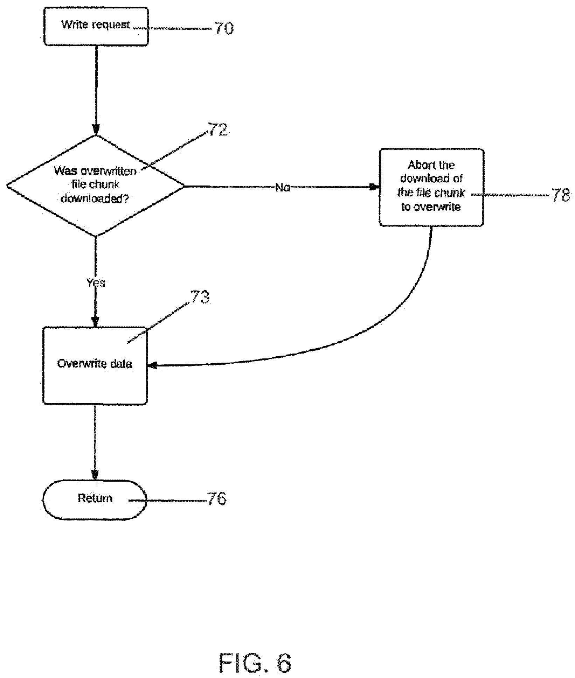

FIG. 6 is a flowchart describing how the Virtual File System Interceptor (VFS Interceptor) 32 used in the receiving device handles an instruction from the Applications or OS 36 of the receiving device to write part of a file currently being transferred in accordance with one or more embodiments.

The Applications or OS 36 ask to write on a specific part of a virtual file at step 70. The VFS Interceptor 32 checks if this part of the target file represented by the virtual file has already been downloaded at 72. If this part has already been downloaded, the VFS Interceptor 32 simply saves the modification at 74 using the Database component 26 of the receiving device and returns at 32.

If this specific part of the target file has not been entirely downloaded, the VFS Interceptor 32 may, in some embodiments, ask the Receiver component 30 of the receiving device to abort the transfer of the part of the target file about to be overwritten at step 78. All modifications to a file during the transfer should be kept. Therefore, the data overwritten by the Applications or OS 36 during the transfer will replace the data of the original file in the receiving device after the transfer have been processed. The transfer of this specific part of the file is no longer necessary, as this part of the file will not be used to transform the virtual file in a "received file" once the transfer has been processed. After this possible transfer cancellation, the VFS Interceptor 32 saves the modification 30 using the Database component 26 of the receiving device and returns at 76.

The advantages of the file methods and systems in accordance with various embodiments include, without limitation, that it makes file transfer between two devices seem instantaneous to the users of the sending and the receiving devices. The methods and systems enable a user receiving files to - without limitation - open, display, modify, organize or delete them before their transfer has even taken place. Because it monitors the actions of the user upon the files being transferred, the methods and systems in accordance with one or various embodiments also increase both real transfer speed and perceived transfer speed. Data deleted or overwritten by the user before reception is not transferred. Also, the files or the parts of the files that the user needs the most can be transferred in priority. As an example, in accordance with one or more embodiments, a user receiving a movie can begin watching it even if the transfer of the movie file in itself is not finished.

### Conclusion

The processes described above may be implemented in software, hardware, firmware, or any combination thereof. The processes are preferably implemented in one or more computer programs executing on a programmable computer, which includes a processor, a storage medium readable by the processor, and input and output devices. Each computer program can be a set of instructions (program code) in a code module resident in the random access memory of the computer. Until required by the computer, the set of instructions may be stored in another computer memory (e.g., in a hard disk drive, or in a removable memory such as an optical disk, external hard drive, memory card, or flash drive) or stored on another computer system and downloaded via the Internet or other network.

Having thus described several illustrative embodiments, it is to be appreciated that various alterations, modifications, and improvements will readily occur to those skilled in the art. Such alterations, modifications, and improvements are intended to form a part of this disclosure, and are intended to be within the spirit and scope of this disclosure. While some examples presented herein involve specific combinations of functions or structural elements, it should be understood that those functions and elements may be combined in other ways according to the present disclosure to accomplish the same or different objectives. In particular, acts, elements, and features discussed in connection with one embodiment are not intended to be excluded from similar or other roles in other embodiments. Additionally, elements and components described herein may be further divided into additional components or joined together to form fewer components for performing the same functions. Accordingly, the foregoing description and attached drawings are by way of example only, and are not intended to be limiting.

In some embodiments there is presented a method of displaying virtual files side-by-side with locally-stored files in the operating system (OS) of a computer device under a common files and folders architecture. Said computer device may include a physical storage device for storing one or more locally-stored files and a virtual file system for handling one or more virtual files. The method comprises the steps, for each locally-stored folder to which virtual files are to be added, of:
(a) providing virtual endpoint folder representing the locally-stored folder in a virtual file system layer such that the contents of the virtual endpoint folder are the exact representation of the contents of the locally-stored folder, and such that changes made to contents of the virtual endpoint folder are replicated in the corresponding contents of the locally-stored folder;
(b) configuring the OS such that the locally-stored folder in a current files and folders architecture of the OS is replaced by the virtual endpoint folder; and
(c) adding one or more virtual files from an external virtual file system to the virtual endpoint folder such that all the files in the virtual endpoint folder are displayed side-by-side, wherein changes made by a user to files in the virtual endpoint folder are replicated in the corresponding files in the external virtual file system or the locally-stored folder.

This method may further include a new file created by a user in the virtual endpoint folder being replicated in the external virtual file system or the locally-stored folder.

Step (b) may be performed by moving the locally stored folder to a hidden location and replacing the locally-stored folder by a symbolic link to the virtual endpoint folder.

The locally-stored folder may be a default folder of the OS and step (b) may be performed by modifying the default folder location in the OS.

The OS may be Microsoft Windows and step (b) may be performed by modifying the Windows Registry Database.

The virtual file system layer may enable moving a virtual file of the virtual endpoint folder from the external virtual file system to the locally-stored folder or from the locally-stored folder to the external virtual file system.

The locally-stored folder may comprise an entire user directory or the whole system hard drive, enabling the user to move the virtual files anywhere in the subfolders included in the user directory or the whole system hard drive.

## Claims

1. A method of receiving one or more files at a receiving computer device from one or more sending computer devices, comprising the steps of:
(a) receiving metadata describing the one or more files from the one or more sending computer devices;
(b) using this metadata to display the one or more files to be transferred as virtual files in an operating system of the receiving device;
(c) receiving the content of the one or more files from the one or more sending computers;
(d) enabling a user of the receiving device to manipulate or modify the virtual files displayed in (b) during (c) as if they were non-virtual files; and
(e) for each file whose content has been received in (c), transforming the virtual file representing it into a non-virtual file including any modifications from the user in (d).

2. The method of claim 1, wherein the data received from the one or more sending computers in (c) and the modifications in (d) are stored temporarily in a local cache of the receiving device during (c).

3. The method of claim 1, wherein to manipulate or modify the virtual files in (d) includes renaming the virtual files or moving the virtual files in the files and folders architecture of the operating device of the receiving device.

4. The method of claim 1, further comprising providing a link between a file received in (c) and the virtual file representing it in (b) using a database local or remote to the receiving device.

5. The method of claim 1, wherein to manipulate or modify the virtual files in (d) includes reading the virtual file during (c) and wherein when a file is read, the method further comprises:
(i) checking whether requested data for the file is available locally on the receiving device;
(ii) when at least some of the requested data is not available locally on the receiving device, waiting for remaining data to be available locally on the receiving device;
(iii) returning data available locally on the receiving device to the user of the receiving device, before, during, or after (b).

6. The method of claim 5, wherein the requested data can be returned as soon as it is at least partially available locally on the receiving device, thereby allowing streaming of the files from the one or more sending devices.

7. The method of claim 5, further comprising returning an error if step (b) exceeds a given time period.

8. The method of claim 5, further comprising requesting the one or more sending computers to prioritize transfer the requested data that is not available locally over other data being transferred in (c).

9. The method of claim 1, wherein to manipulate or modify the virtual files in (d) includes:
writing on, overwriting, appending and prepending, truncating or deleting the virtual file during (c) and wherein when a file is written on, overwritten, appended and prepended, truncated or deleted, the method further comprises temporarily saving the file modifications in the local cache on the receiving device during (c) and wherein any further reading of the virtual file takes into account such modification or manipulation; or
overwriting, truncating, or deleting one or more parts of the file that have not yet been received in (c), and further comprising aborting the transfer of said one or more parts from the one or more sending computers to save time and bandwidth.

10. The method of claim 1, wherein the transfer of each file received in step (c) is considered complete when the receiving computer can read its corresponding virtual file from end to end using only data local to the receiving device.

11. The method of claim 1, wherein the receiving device or the one or more sending devices can schedule the data transfers of step (c) according to various levels of priority, depending on the actions undertaken by the user in step (c) and the type of files being transferred.

12. The method of claim 1, wherein the metadata received in (a) include:
additional files generated by or stored on the one or more sending computers, such as one or more Microsoft Windows Thumbs.db files or one or more Apple Mac OS .DS_Store files, which enable the OS of the receiving device to display more information about the virtual files in (b) during step (c), or
the organization of the files being received in (c) in folders and subfolders.

13. The method of claim 1, wherein the metadata describing the one or more files comprises the identifiers of the one or more files and the organization of the files in folders and subfolders when there is a plurality of files.

14. The method of claim 1, wherein: several different file transfer methods can be used in (c); or several file transfers can take place at the same time in (c).

15. The method of claim 14, wherein: the file transfer methods include peer-to-peer file transfer, direct file transfer, or server-based file transfer; or different file transfer methods are used at the same time.
